# EUROPEAN PATENT APPLICATION

(11) **EP 1 838 121 A1**
(43) Date of publication of application: **26.09.2007**
(21) Application number: 06251533.3
(22) Date of filing: 22.03.2006
(51) Int. Cl.: H04Q 7/38

(54) **Method and apparatus for re-establishing wireless communication sessions**

(71) Applicant: BRITISH TELECOMMUNICATIONS public limited company, London EC1A 7AJ (GB)
(72) Inventor: The designation of the inventor has not yet been filed
(74) Representative: Williamson, Simeon Paul

(57) **Abstract**

This invention relates to maintaining or re-establishing a communications session in a wireless communications system. The present invention provides a method of re-routing a call between a user device and a third party device, the method comprising: setting up a call with the third party device using a first wireless connection between the user device and an access point; monitoring a quality parameter of the first wireless connection at the access point; automatically re-routing the call from the third party device to the user via a second wireless connection between the user device and a base station in response to determining that the quality parameter of the first wireless connection has fallen below a predetermined threshold.

## Description

### Field of the Invention

This invention relates to maintaining or re-establishing a communications session in a wireless communications system.

### Background of the Invention

There is increasing use of packet-based real-time communications over the Internet as access bandwidths and applications improve and increase in popularity. Examples include Internet Telephony using Voice Over Internet Protocol (VoIP) for example together with popular applications such as Skype^{™}, and Video conferencing. These types of communication however are highly sensitive to delayed or missing/dropped transmissions which impact on the quality and indeed viability of these services.

This problem is exacerbated when this technology is employed on wireless access networks or links, such as used in small portable devices like mobile phones, Personal Digital Assistants (PDA), or even laptop computers. Wireless access technologies such as Wi-Fi (IEEE802.11) or Bluetooth^{™} may be used in the home or in public areas such as offices, coffee shops, airports, hotels and shopping malls. This wireless access technology has a number of characteristics which are detrimental to the provision of packet-based real-time communications including typically reduced bandwidth compared with the rest of the total communications path and a noisy and therefore less reliable propagation environment leading to increases in latency, dropped packets, and dropped calls. With electronics devices being increasingly provisioned with two or more wireless networking capabilities, there are however various mechanisms for re-routing calls through other wireless networks should a call on one wireless network fail, for example if the portable handset moves out of range. This problem can also affect non real-time communications services such as email.

US2003/3134638 discloses a communications system having linked WLAN and WWAN (wireless wide area network) base stations to which a mobile phone or similar electronic device can connect. The mobile device is able to hand-over a call with a third party from the WLAN to the WWAN by first requesting a Temporary Local Directory Number (TLDN) from the WLAN base station when it detects the quality of the connection with the WLAN weakening. When the connection fails, for example the mobile phone has gone out of range, the mobile phone requests a call be placed through the WWAN using the TLDN. This request is routed to the WLAN base station which connects the incoming call with the third party upon recognising the TLDN.

US6804532 discloses a system in which the mobile device monitors the link quality of a wireless connection supporting a call, and then requests re-routing of the call over a second wireless network to which pre-routing information has been forwarded in anticipation of the need for hand-over.

### Summary of the Invention

The present invention provides a method of maintaining or re-establishing a communications service such as a VoIP call or session with a third party which has been established using a wireless link or connection such as Bluetooth^{™} or Wi-Fi. The access point supporting the wireless link is arranged to monitor the connectivity or quality of the wireless connection and to send an instruction or request to re-route the call in response to the wireless connection becoming non-viable or a connection quality parameter such as the signal strength falling below a certain threshold. The communications service may then be re-connected using another wireless link, for example a GSM connection. The mobile device is arranged to automatically answer an incoming call over the other wireless link (eg GSM) and which is associated with the third party in order to continue the call without either party having to re-dial. This means that if the communications service, for example a VolP call, can no longer be supported by the current wireless link, due to the user moving out of range or the propagation environment changing, then the service or call is re-established using another wireless link which is more robust, has a greater range, or reduced interference.

The use of the wireless connection access point to monitor the quality of the wireless connection reduces the complexity of the mobile device which doesn't need to have complicated software which interworks with corresponding software on various network components on the network side. This in turn typically requires agreement between network and mobile device suppliers on a suitable protocol for controlling operation of the overall system, which further adds to mobile device complexity. In addition because there is no negotiation with the mobile device required in order to implement the hand-over or re-routing, the system can allow the wireless connection to get weaker than methods requiring the mobile device to implement the hand-over before it tries to issue a re-routing request as there is no implication if the mobile device goes completely out of range. This is particularly advantageous in wireless environments where the signal can fade rapidly resulting in problems for a mobile device trying to implement hand-over, or where the signal only fades briefly, unnecessarily prompting hand-over.

In an embodiment, a mobile phone starts a VolP call with a third party using a Bluetooth^{™} wireless link to an access point coupled to a VoIP server via the Internet. When the user moves out of range of the access point, the access point detects this, and sends a request to the VoIP server to re-route the call to the mobile phone using its GSM phone number. The mobile phone receives the call and automatically accepts it in response to recognising an appropriate third party identifier such as the third party's calling line ID (CLI).

Typically the real-time communications services will be packet based calls such as VolP or video calling, however other communications services could alternatively be provided for example bursty data connections for maintaining email or web browsing connectivity for example.

In one aspect there is provided a method of re-routing a call between a user device and a third party device, and which includes setting up a call such as a VoIP call with the third party device using a first wireless connection for example a Bluetooth connection between the user device and an access point. The access point monitors a quality parameter such as BER of the first wireless connection for the duration of the call. Whether or not a call is in progress may be determined using a control message from the user device sent to the access point, or by the access point monitoring packets sent from or received by the user device, for example SIP packets which indicate a VolP call is being set up or is in progress. The call is then automatically re-routed from the third party device to the user device via a second wireless connection between the user device and a base station in response to determining that the quality parameter of the first wireless connection has fallen below a predetermined threshold; for example indicating that the user device has moved out of range of the access point using the first wireless connection. The call re-routing may be achieved with a re-routing request sent by the access point when it determines that the user device has moved out of range. The re-routing request is sent to a network entity such as a VolP server or media gateway where a server application instructs the required re-routing of the call in response to receiving the instruction from the access point.

In an embodiment the re-routing uses a re-routing number or identifier associated with the user device and the second wireless connection, for example the user device's GSM phone number. This re-routing number may be supplied by the user device to the access point for inclusion in the re-routing request, it may be mapped from an identifier such as a Skype VoIP identity associated with the user device's first wireless connection by the access point of a network entity such as a VoIP server.

There is also provided a system for re-routing a call between a user device and a third party device, the system comprising:
an access point coupled to the user device using a first wireless connection;
a network coupled to the access point, the third party device, and a base station coupled to the user device using a second wireless connection;
the access point arranged to monitor a quality parameter of the first wireless connection during a call between the user device over the first wireless connection to the third party over the network;
the system arranged to automatically re-route the call from the third party device to the user device via the second wireless connection between the user device and the base station in response to determining that the quality parameter of the first wireless connection has fallen below a predetermined threshold.
There is also provided a method of operating a user device and comprising connecting to an access point using a first wireless connection, connecting to a base station using a second wireless connection, automatically receiving a call on the second wireless connection whilst in a call on the first wireless connection with a third party device, the call on the second wireless connection being automatically received in response to receiving a call set-up request associated with the third party device over the second wireless connection.

There is also provided a method of operating an access point and comprising connecting to a user device using a wireless connection, connecting to a network in order to provide a communications path between the user device and the network, monitoring a quality parameter of the wireless connection, sending a call re-routing request associated with the electronic device to the network in response to detecting that the quality parameter has fallen below a threshold.

### Brief Description of the Drawings

Embodiments will now be described with reference to the following drawings, by way of example only and without intending to be limiting, in which:
Figure 1 illustrates a high level schematic of a communications system according to an embodiment;
Figure 2 illustrates a flow diagram of a method of operating an electronic device according to an embodiment;
Figure 3 illustrates a flow diagram of a method of operating an access point according to an embodiment;
Figure 4 illustrates a flow diagram of a method of operating a call re-routing server according to an embodiment; and
Figure 5 illustrates a signalling diagram according to an embodiment.

### Detailed Description

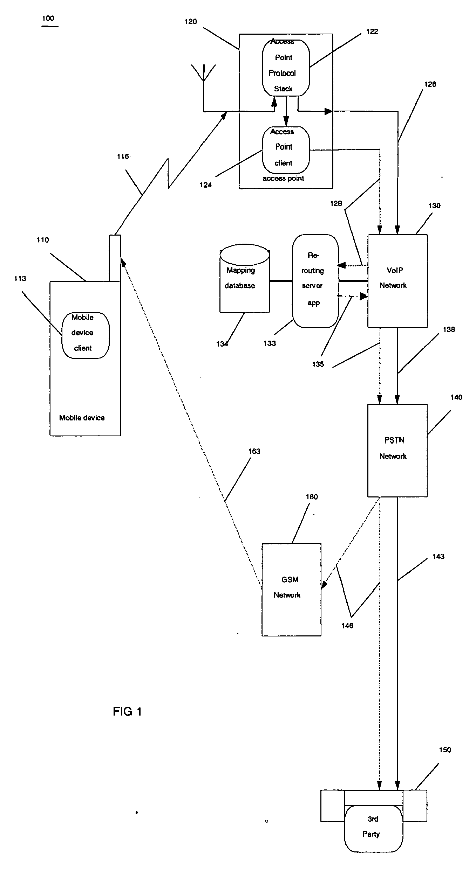

Figure 1 shows a wireless communications system which can be used to support real-time communications services such as wireless telephony or video conferencing. The wireless communications system 100 comprises a mobile phone 110 or other portable electronics device, an access point 120, a VoIP server or network 130, a PSTN network or voice server 140, third party equipment 150, and a GSM network 160. The electronics device 110 may be wirelessly connected to the access point 120 using a short range wireless technology or link 116 such as Bluetooth or Wi-Fi for example. The access point 120 may be coupled to the VolP server 130 using a broadband Internet link 126 for example. The PSTN network servers 140 will be coupled to the VolP server 130 and the GSM network servers using suitable links as is known. The PSTN network 140 is coupled to the third party equipment 150 such as a fixed line telephone using a PSTN link 143.

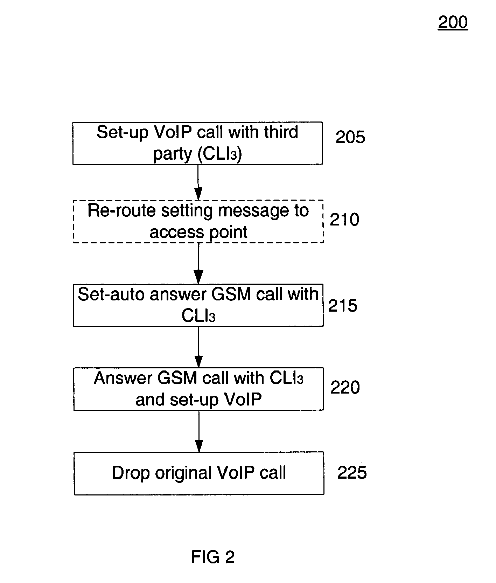

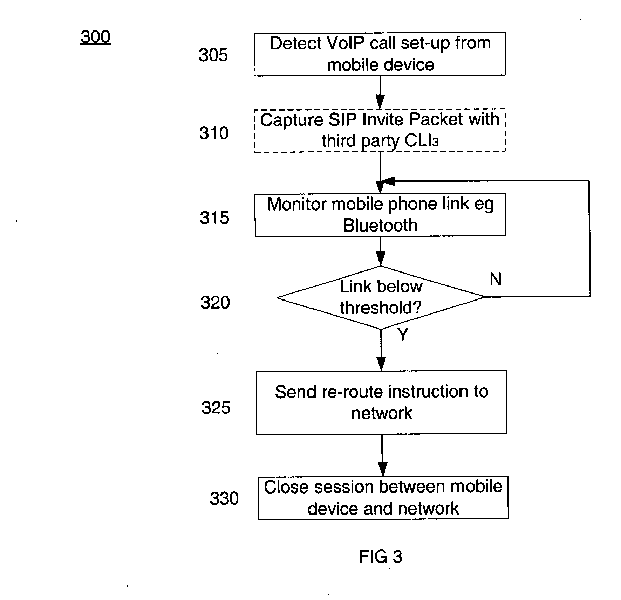

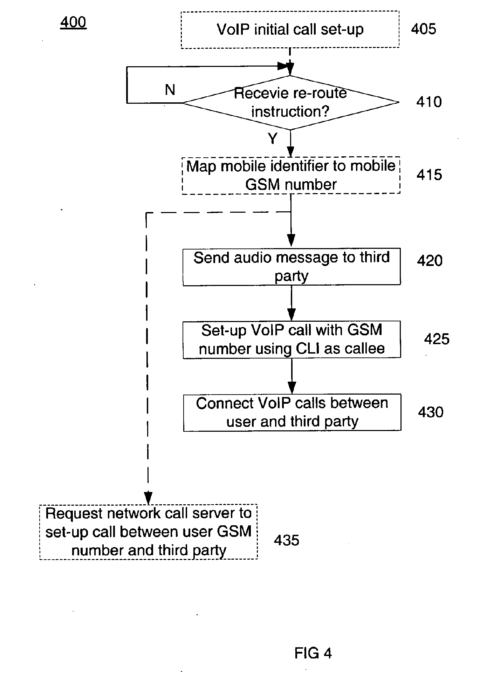

The mobile electronics device 110 includes a mobile device client 113 which is typically implemented by a software module executed on the device's processor, and which operates according to the method of figure 2. Similarly the access point 120 includes an access point protocol stack 122 which supports the communications link between the electronic device 110 and the VolP server 130, for example passing VolP packets between the Biuetooth^{™} wireless link 116 and an ASDL link 126. The access point client 124 operates according to the method of figure 3, and includes the ability to monitor the quality of the wireless link 116, and in some embodiments to intercept or monitor packets traversing the access point protocol stack 122 in order to identify certain types of packets. In particular the access point client 124 may be configured to identify and interpret session initiation protocol (SIP) packets which are used for controlling VoIP calls. A re-routing server application 133 is typically associated with the VoIP server 130, although it could be located at other parts of the network side (130, 140, 160) of the system 100. The re-routing server application 133 receives a request from the access point client 124 to re-route the VoIP call between the mobile device 110 and the third party equipment 150 via the GSM network 150 rather than via the access point 120. The method of operating this server 133 is described in more detail with reference to figure 4.

Figure 2 shows a method of operating the mobile device 110 according to an embodiment. The method (200) initially sets up a VoIP call between the mobile device 110 and the third party 150 (205). This is achieved by first setting up a "short-range" wireless link 116 with the access point 120 if this does not already exist, in order to use the access point's broadband Internet connection. The VoIP call set-up is achieved using SIP messages as will be well known to those skilled in the art, which are sent over the wireless link 116 to the VolP network 130. Typically the mobile device 110 will send a SIP Invite message to the VolP server 130 which will include an identifier for the mobile device such as its Skype phone number or caller line identifier (CLI₁) together with an identifier (CLI₃) for the third party - again typically the third parties phone number. This information is used by the VolP server to call the third party 150 in order to complete the VolP call. This is described in more detail with reference to figure 4.

Once the VolP call has been set-up, the method may optionally forward a control message to the access point client 124 indicating that re-routing of the current call should be implemented if the wireless connection 113 fails (210). This message may also include a re-routing number (CLl₂) such as the mobile device's GSM number. Alternatively the access point may automatically detect the set-up of a VolP call by intercepting the associated SIP packets for example. This minimises the effort and complexity of the mobile phone 110. The method then sets an auto-answer feature on the mobile device with the phone number (CLI₃) or another suitable identifier for the third party (210). The auto-answer feature is included on most new mobile phones and when set automatically answers incoming GSM or other long range or cellular (eg CDMA, UMTS) wireless calls. However the auto-answer is set to answer only incoming calls (CLI₃) from the third party 150 or in response to a special identifier (CLI_{special}), and not any other incoming calls which will have different caller line identifiers (CLI). The user of the mobile device 110 then continues with their VoIP call to the third party using the short range WLAN or PAN (personal area network) wireless link 116.

The mobile device 110 does not determine when it is out of range of the access point 120, this role is instead carried out without the involvement of the mobile device 110. However as a result of the mobile device going out of range, the access point instructs the re-routing of the VolP call via the cellular GSM network 160 to the mobile device 110. Thus in the next step (220), the method automatically answers an incoming GSM call on the GSM connection 163 from a GSM base station (shown generally as a GSM network 160) where the incoming call is associated with the third party's caller line identifier (CLI₃). This identifier is typically sent as part of the call set-up process as is known. The VolP call then continues over the GSM or long range wireless connection 163 with the mobile device 110. The method then drops the Vol P call via the short range wireless link (225) as this is now no longer supported. Thus although there may be a brief break in the VolP call, the user of the mobile device does not need to redial the third party once he has gone out of range of the access point; instead the "replacement" call is received automatically from the base station (160) providing a second wireless connection to the mobile device 110. This may optionally be accompanied by a predetermined audio message informing the user of the situation.

Figure 3 shows a method of operating the access point 120 according to an embodiment. The method (300) initially detects a VoIP call set-up from the mobile device (305). This can be achieved by monitoring traffic from the mobile device for SIP packets which indicate set-up of a VoIP call - the call could be set-up by either the mobile device 110, or the third party equipment 150 calling the user of the mobile device. Certain information can be recovered from these SIP packets, including an identifier (CLI₃) for the third party being called as well as an identifier (CLI₁) for the mobile device (310). These identifiers can be used tore-route the call later. In an alternative arrangement, a message can be sent from the mobile device 110 to the access point 120 (210) that the mobile device is setting up a VoIP call, and this message can include the third party (CLI₃) and/or a re-routing number (CLI₂) such as the mobile device's GSM phone number.

The method then monitors the short range (eg Bluetooth) wireless link 116 between the mobile device 110 and the access point 120 (215). This can be achieved in a number of ways, for example by recording the BER or signal strength of the link 116 as is known. The method then checks whether this quality parameter or a combination of quality parameters are below a predetermined threshold indicating that the mobile device 110 has moved out of range (320). If this is not the case (320N), the method continues to monitor the link quality. However if the link quality is such that it indicates the mobile has moved out of range (320Y), then the method sends a special re-routing instruction (325). This instruction is sent to the re-routing server application 133 which is typically resident on the VoIP server 130, and the instruction is typically a SIP "path no longer valid" type message. The re-routing instruction can be configured to include the recovered identifier (CLI₃) of the third party, the GSM identifier or re-routing number (CLI₂) associated with the mobile device 110, or an identifier (CLI₁) associated with the mobile devices calling or callee number for the original VoIP call through the access point. The re-routing number (CL₂) can be passed initially from the mobile device 110 to the access point (210), mapped by the access point, or the re-routing call server 133 from the mobile device's initial VolP call number (CLI₁) using a suitable database. A user identifier CLl1 to re-routing number or identifier CLl2 mapping database 134 is indicated in figure 1 as being coupled to the re-routing server application 133 which is resident on the VoIP network or server 130. However these entities may be distributed in any suitable maner as would be understood by those skilled in the art. The re-routing message from the access point 120 to the re-routing server application 133 causes the re-routing of the VolP call through the cellular or GSM network 160 as described in more detail with respect to figure 4 below. The method can then be configured to close the wireless session or link 116 between the mobile device and the access point (330).

Figure 4 illustrates a method (400) of operating a re-routing server application 133 which is typically integrated into the VolP server 130; and may form part of an updated VolP routing protocol. Alternatively this server application 133 may be associated with a PSTN 140 or cellular 160 network. Initially the VolP call is set-up (405) by the VolP network or server 130 using SIP messages as is known. SIP messages are used to set up each leg of the call, between the mobile device 110 and the VolP server 130, and also between the third party equipment 150 and the VolP server 130. Once the two legs have been established, the VolP server 130 connects the two legs together, and the call can proceed. Once the VolP call is set-up, the method awaits a re-route message (410). This re-routing message may include an identifier (CLI₃) for the third party, although alternatively the method may simply be able to recover this information from the VolP server which will have used this information to direct the initial call set-up. The message may also include a re-routing number (CLI2). If the re-routing number is not included in the re-routing message, the method maps the mobile identifier (CLI₁) from the re-route message or the original VolP call setup to a land-line, GSM number or other number such as a Skype username or number (CLI₂) associated with the user of the mobile phone or identifier (415). This mapping may be contained in a database 134 associated with the re-routing server application 133, in which case the user will need to register their re-routing number with the re-routing service (133). Where the number to re-route the call to is provided by the access point, this may be programmed into the access point by the user.

The method then sends an audio message to the third party (420), for example a pre-recorded message informing the third party that the current call is being redirected. The method then instructs the VolP network to set-up a new VolP call with the re-routing number (CLI₂) from the re-routing message or the mapping database (425). As discussed previously, in this embodiment the re-routing number (CLI₂) is associated with the GSM phone number of the electronic device 110. This VolP call set-up is performed in the standard manner, with a call setup message for the leg to the mobile device including the identifier (CLI₃) of the third party. Alternatively a special application identifier (CLI_{special}) associated with the application may be used. The call-set up procedure causes the user's mobile device 110 to auto-answer the incoming GSM call as previously discussed. When this occurs, the method joins the newly set-up VolP leg to the mobile device via the GSM base station to the existing VolP leg to the third party (430) so that the original VolP call can be resumed. In an alternative arrangement, the method may delegate the call set-up and joining functions to another network entity such as a PSTN network server by forwarding a suitable control instruction as is known (435).

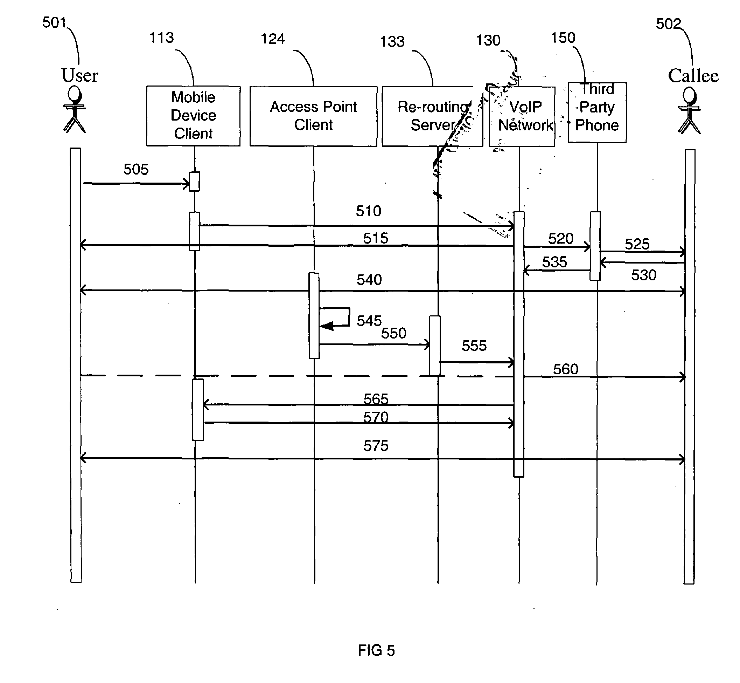

Figure 5 illustrates signalling between the various entities of the system. A user 501 instructs the mobile device client 113 to set up a VolP call (505). A VolP call can alternatively be set up without the mobile device client, however this may not automatically re-route if the user went out of range, depending on system configuration. If a short range wireless connection has not already been set-up with the access point 120, then this is completed and a suitable VoIP client on the device 110 requests the VoIP network 130 to set-up a call to a third party phone 150 (510). The VoIP network sets up a VoIP path between the user's device 110 and the VoIP network (515). The VoIP network 130 then sends a ringing tone to the third party VoIP capable phone using SIP messages, for example through the PSTN network (520). This ringing tone is directed at the third party user or callee (525), and when the third party user or callee answers the phone 150 (530), further SIP messages are exchanged between the third party phone 150 and the VolP network 130 in order to set up a VolP path between these entities as is known (535). The VoIP network 130 then connects these paths together to form the call (540).

The access point client 124 monitors the VoIP link (545), and sends a re-routing message to the re-routing server application 133 upon detecting that the mobile device has gone out of range (550). The re-routing server in turn instructs the VoIP network to tear-down the call between the VoIP network and the client device 110 (555), and to send an audio message to the third party over the remaining leg of the call (560). The VolP network then sets up a VolP call or path to the mobile device's GSM number (CLl₂) (565). This is automatically answered by the mobile device client, and the VolP call over the GSM connection is established (570). The VolP network then connects the call with the mobile device 110 and the call with the third party 150 together to establish the alternative routing for the original VoIP call via the GSM network 160 (575).

Thus if the user moves out of range of the access point using a short range wireless connection such as a Bluetooth association, the VoIP call is automatically re-routed to the mobile device via its GSM or other cellular connection without either party having to re-dial the other.

Whilst the embodiments have been described with respect to re-routing VolP calls from a Bluetooth or Wi-Fi wireless connection to a cellular (eg GSM, CDMA, UMTS) connection, the re-routing may involve any two networks for example re-routing between Bluetooth and Wi-Fi networks where the re-routing messaging is carried out on the network side. Similarly communications sessions other than VoIP calls could be supported, for example email connectivity, circuit switched calls, of video calling.

The skilled person will recognise that the above-described apparatus and methods may be embodied as processor control code, for example on a carrier medium such as a disk, CD- or DVD-ROM, programmed memory such as read only memory (Firmware), or on a data carrier such as an optical or electrical signal carrier. For many applications embodiments of the invention will be implemented on a DSP (Digital Signal Processor), ASIC (Application Specific Integrated Circuit) or FPGA (Field Programmable Gate Array). Thus the code may comprise conventional programme code or microcode or, for example code for setting up or controlling an ASIC or FPGA. The code may also comprise code for dynamically configuring re-configurable apparatus such as reprogrammable logic gate arrays. Similarly the code may comprise code for a hardware description language such as Verilog^{™} or VHDL (Very high speed integrated circuit Hardware Description Language). As the skilled person will appreciate, the code may be distributed between a plurality of coupled components in communication with one another. Where appropriate, the embodiments may also be implemented using code running on a field-(re)programmable analogue array or similar device in order to configure analogue hardware.

The skilled person will also appreciate that the various embodiments and specific features described with respect to them could be freely combined with the other embodiments or their specifically described features in general accordance with the above teaching. The skilled person will also recognise that various alterations and modifications can be made to specific examples described without departing from the scope of the appended claims.

## Claims

1. A method of re-routing a call between a user device and a third party device, the method comprising:
setting up a call with the third party device using a first wireless connection between the user device and an access point;
monitoring a quality parameter of the first wireless connection at the access point;
automatically re-routing the call from the third party device to the user device via a second wireless connection between the user device and a base station in response to determining that the quality parameter of the first wireless connection has fallen below a predetermined threshold.

2. A method according to claim 1, wherein the automatic routing comprises forwarding a re-routing message from the access point to a communications network entity which instructs re-routing of the call to the base station.

3. A method according to claim 2, wherein the quality parameter monitoring is in response to the access point determining that the call has been set-up.

4. A method according to claim 3 wherein the call set-up determination comprises identifying call set-up packets passed between the user device and the communications network identity

5. A method according to any one preceding claim, further comprising mapping an identifier associated with the first wireless connection to an identifier associated with the second wireless connection in order to re-route the call using the second wireless connection identifier.

6. A method according to any one preceding claim, wherein the first wireless connection is a Bluetooth or Wi-Fi connection, the second wireless connection is a cellular wireless connection, and the call is a VoIP call.

7. An electronics device comprising:
a transceiver for providing a first wireless connection with an access point;
a second transceiver for providing a second wireless connection with a base station;
a mobile device client arranged to automatically receive a call on the second wireless connection whilst in the call on the first wireless connection with a third party device, the call being automatically received in response to receiving a call set-up request associated with the third party device over the second wireless connection.

8. A device according to claim 7, wherein the call set-up request comprises the third party device's caller line identifier (CLI).

9. A device according to claim 7 or 8, wherein the mobile device client is further arranged to set-up the call on the first wireless connection with the third party, the call being a VoIP call.

10. An access point comprising:
a transceiver for providing a wireless connection with an electronics device;
means for connecting to a network in order to provide a communications path between the electronics device and the network;
means for monitoring a quality parameter of the wireless connection in response to determining a call has been placed between the electronics device and a third party device using the communications path;
means for sending a call re-routing request associated with the electronic device to the network in response to detecting that the quality parameter has fallen below a threshold.

11. An access point according to claim 10, wherein the quality parameter comprises a bit error rate (BER) level, and/or a signal strength metric.

12. An access point according to claim 10 or 11, wherein determination of a call being placed is by detecting a SIP packet on the communications path.

13. A carrier medium carrying processor code which when executed on a processor causes the processor to carry out a method according to any one of claims 1 to 6.
